# FASCICULE DE BREVET EUROPEEN

(11) **EP 1 793 141 B1**
(45) Date de publication et mention de la délivrance du brevet: **24.06.2009**
(21) Numéro de dépôt: 06124904.1
(22) Date de dépôt: 28.11.2006
(51) Int. Cl.: F16F 15/134

(54) **Amortisseur de torsion**
Drehschwingungsdämpfer
Torsional vibration damper

(30) Priorité: 30.11.2005 FR 0553641
(43) Date de publication de la demande: 06.06.2007
(73) Titulaire: Valeo Embrayages, 80009 Amiens (FR)
(72) Inventeur: Lefolle, Laurent, Proyart 80340 (FR); Fenioux, Daniel, Saleux 80480 (FR)
(74) Mandataire: Lemaire, Marc

(56) Documents cités:
- EP-A2- 0 522 718
- DE-A1- 10 206 317
- FR-A1- 2 769 676
- US-A- 5 772 515
- US-A- 5 882 264
- US-A- 6 131 487

## Description

L'invention concerne un amortisseur, tel un double volant, en particulier pour véhicule automobile.

Il est maintenant usuel, au moins pour les véhicules équipés d'un moteur puissant, de monter un double volant amortisseur entre le vilebrequin du moteur et l'embrayage, pour mieux absorber et amortir les vibrations et à-coups générés par le moteur. Ce double volant amortisseur comprend deux volants d'inertie coaxiaux (un volant primaire monté fixement en bout du vilebrequin et un volant secondaire formant le plateau de réaction de l'embrayage), le volant secondaire étant centré sur le volant primaire au moyen d'un palier. Un amortisseur de torsion à ressorts et à moyens de friction est monté entre les deux volants pour transmettre un couple de rotation d'un volant à l'autre tout en absorbant et en amortissant les vibrations et les à-coups.

Les ressorts de l'amortisseur sont souvent à disposition circonférentielle autour de l'axe de rotation et sont en général pré-cintrés pour mieux s'adapter à leurs logements dans une chambre torique formée par l'un des volant et partiellement remplie de graisse. Les extrémités des ressorts viennent en appui sur des butées solidaires des volants, agencées de sorte que toute rotation ou oscillation d'un volant par rapport à l'autre provoque une compression des ressorts de l'amortisseur dans un sens ou dans l'autre et soit contrariée par cette compression.

Une caractéristique des doubles volants amortisseurs est qu'ils présentent une fréquence de résonance pour une vitesse de rotation du moteur inférieure au régime de ralenti, de sorte que l'on passe par la résonance à chaque démarrage et à chaque arrêt du moteur. L'amortisseur de torsion doit pouvoir supporter cette résonance qui se traduit par un pic du couple de rotation transmis au volant secondaire et pour lequel les ressorts de l'amortisseur sont comprimés au maximum, leurs spires venant en appui les unes sur les autres.

Dans certaines circonstances, par exemple lors d'un démarrage manqué, le phénomène de résonance est encore accentué et les ressorts comprimés au maximum sont soumis à des chocs violents qui peuvent provoquer la rupture de leurs extrémités et/ou un désenroulement des ressorts et/ou un glissement des spires des ressorts les unes sur les autres en direction de l'axe de rotation, ce qui entraîne le blocage et la mise hors service du double volant amortisseur.

Il est donc important de veiller à ce que les ressorts de l'amortisseur puissent travailler dans les meilleures conditions possibles, pour mieux supporter ces conditions extrêmes et prolonger la durée de service du double volant amortisseur.

Pour cela, on a déjà proposé (US-A-6.131.487) de meuler les extrémités des ressorts de l'amortisseur de façon à ce qu'elles présentent une surface plane perpendiculaire à l'axe des ressorts permettant un appui correct sur les butées solidaires des volants. On a constaté que cela augmente de façon significative la durée de service des ressorts.

Il a également été proposé d'équiper les doubles volants amortisseurs de ressorts ayant des raideurs différentes pour une meilleure absorption des vibrations et des à-coups générés par le moteur, aussi bien au ralenti qu'à pleine charge. Le document FR-A1-2,769,676 décrit un double volant amortisseur de ce type dans lequel les ressorts de l'amortisseur sont associés par groupes de trois, les ressorts de chaque groupe ayant des raideurs différentes.

La présente invention a pour but d'améliorer encore les performances de ces amortisseurs et de prolonger leur durée de service de façon notable.

Elle propose à cet effet un amortisseur de torsion, en particulier un double volant pour véhicule automobile, agencé entre un élément d'entré et un élément de sortie coaxiaux pour la transmission d'un couple de rotation, cet amortisseur comprenant des ressorts à disposition circonférentielle et dont les extrémités qui viennent en appui sur des butées solidaires des éléments d'entrée et de sortie, sont meulées et présentent des surfaces planes d'appui sur ces butées, les extrémités meulées des ressorts se terminant par des pointes orientées vers l'intérieur des ressorts, caractérisé en ce que la pointe orientée vers l'intérieur à chaque extrémité de chaque ressort s'étend sur au moins 90° autour de l'axe du ressort.

Grâce à cette orientation particulière des pointes des extrémités meulées des ressorts, ces pointes qui sont relativement fragiles en raison de leur faible épaisseur, ne viennent pas heurter des butées solidaires des volants quand les ressorts sont comprimés. Les risques de rupture de ces pointes sont notablement réduits et la durée de service des ressorts et de l'amortisseur est augmentée.

En pratique, cette pointe d'extrémité orientée vers l'intérieur du ressort peut s'étendre sur un angle compris entre 90° et 180° environ, de sorte que la zone de raccordement de cette pointe au reste de l'extrémité meulée du ressort a, du fait de son épaisseur supérieure à celle de la pointe, une résistance mécanique qui lui permet de supporter des chocs violents à la compression maximale des ressorts.

Avantageusement, la pointe de chaque ressort se trouve sur la partie radialement interne du ressort.

Grâce à cette disposition, les parties radialement internes des extrémités des ressorts, qui sont serrées les unes sur les autres à la compression maximale des ressorts, sont des parties de spires non meulées, qui ont une épaisseur maximale et donc une résistance mécanique maximale.

Dans un mode de réalisation de l'invention, les ressorts sont agencés par paires dans lesquelles deux ressorts de même diamètre, ayant des raideurs différentes et des pas inversés, sont disposés bout à bout.

On assure de cette façon une meilleure absorption des vibrations et des à-coups aux différents régimes de fonctionnement du moteur et on conserve un bon appui l'un sur l'autre des deux ressorts de chaque paire, grâce au fait que les extrémités en regard des deux ressorts ont tendance à tourner dans le même sens à la compression des ressorts, en raison des enroulements inversés de ces deux ressorts.

Grâce à ce bon appui, les extrémités des deux ressorts de chaque paire peuvent être directement en appui l'une sur l'autre.

En variante, une coupelle d'appui est interposée entre les extrémités de ces deux ressorts, cette coupelle comprenant des moyens de centrage et de guidage des extrémités des deux ressorts.

L'invention sera mieux comprise et d'autres caractéristiques, détails et avantages de celle-ci apparaîtront plus clairement à la lecture de la description qui suit, faite à titre d'exemple en référence aux dessins annexés dans lesquels :
La figure 1 est une vue de face avec arrachement partiel d'un double volant amortisseur selon l'invention ;
La figure 2 est une vue partielle en perspective, à plus grande échelle, de l'extrémité d'un ressort de l'amortisseur de torsion.

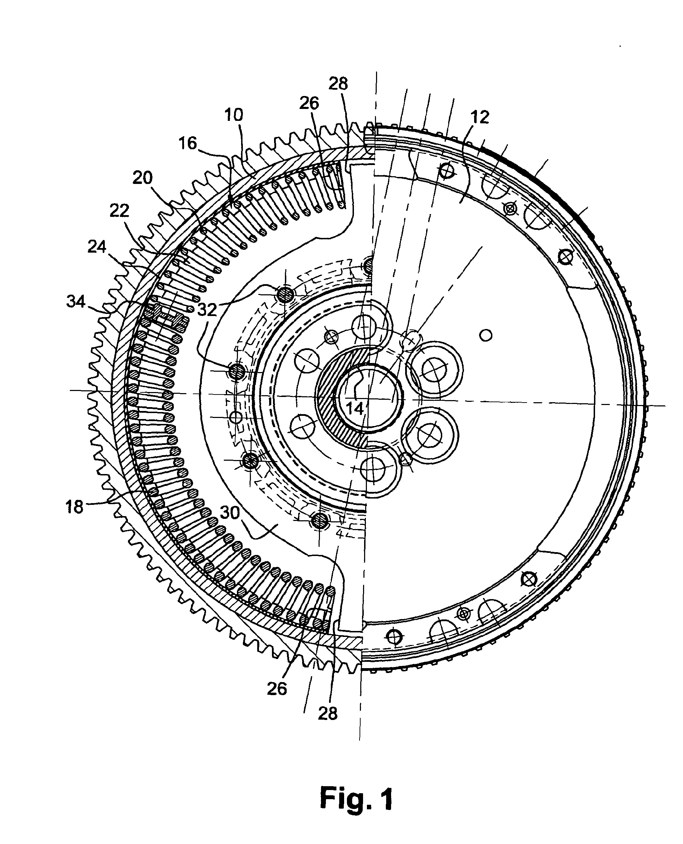

Le double volant amortisseur de la figure 1 comprend un volant d'inertie primaire 10 destiné à être monté fixement en bout d'un vilebrequin d'un moteur à combustion interne de véhicule automobile et un volant d'inertie secondaire 12 qui est centré et guidé sur le volant primaire 10 au moyen d'un palier 14 qui peut être un palier lisse ou un roulement à billes, le volant secondaire 12 formant le plateau de réaction d'un embrayage relié à l'arbre d'entrée d'une transmission, par exemple l'arbre d'entrée d'une boîte de vitesses.

Un amortisseur de torsion 16 formé de ressorts et de moyens de friction est agencé entre les deux volants d'inertie pour transmettre un couple de rotation de l'un à l'autre, entre le vilebrequin du moteur et l'arbre d'entrée de transmission.

Cet amortisseur de torsion comprend, dans l'exemple représenté, deux paires de ressorts 18, 20 qui sont logés dans une chambre torique 22 formée par l'un des volant (le volant primaire 10 dans l'exemple représenté), partiellement remplie de graisse pour diminuer les frottements et dans laquelle est montée une goulotte 24 formant une surface d'appui radialement externe pour les ressorts.

Chaque paire de ressorts 18, 20 s'étend sur un peu moins de 180° entre des butées 26 formées par le volant primaire 10 ou solidaires du volant primaire 10 et des butées 28 formées par des pattes radiales d'un voile annulaire 30 fixé au volant secondaire 12 par des moyens tels que par exemple des rivets 32.

Les ressorts 18, 20 de chaque paire sont des ressorts à spires hélicoïdales et ont sensiblement le même diamètre extérieur, le ressort 18 étant formé par enroulement d'un fil d'un diamètre supérieur à celui du fil constituant l'autre ressort 20 et ayant une raideur supérieure à celle du ressort 20.

Les premières extrémités des ressorts, qui viennent en appui sur les butées 26 du volant primaire et sur les pattes radiales 28 du voile annulaire 30, sont meulées pour former des surfaces d'appui qui sont planes et sensiblement perpendiculaires aux axes des ressorts.

Les secondes extrémités de ces ressorts sont en appui l'une sur l'autre par l'intermédiaire d'une coupelle 34 interposée entre les ressorts et comportant des moyens de centrage et de guidage des secondes extrémités des ressorts. De façon classique, chaque coupelle 34 est métallique ou en matière plastique et est conçue pour avoir une masse aussi faible que possible.

Les secondes extrémités des ressorts sont également meulées, pour former une surface plane d'appui sur une face correspondante de la coupelle 34, ce qui simplifie la réalisation de la coupelle.

Les deux ressorts 18, 20 mis bout à bout dans chaque paire ont des pas inversés, comme on le voit bien sur la figure 1 et les pointes 36 qui forment les extrémités de ces ressorts se trouvent sur la partie ou la moitié radialement interne de chaque ressort, c'est-à-dire du côté opposé à la goulotte 24 d'appui et de guidage de ces ressorts.

Le meulage des spires d'extrémité des ressorts est effectué sur la plus grande partie de chaque spire d'extrémité,soit sur environ trois-quarts de cercle. Ainsi, les extrémités meulées des ressorts présentent des surfaces planes d'appui aussi bien sur les butées 26 du volant primaire 10 que sur les pattes radiales 28 du voile annulaire 30 fixé sur le volant secondaire 12.

Dans une variante de réalisation, les secondes extrémités des deux ressorts 18, 20 de chaque paire s'appliquent directement l'une sur l'autre, aucune coupelle d'appui 34 n'étant prévue entre ces extrémités. Le meulage des extrémités des ressorts fait que les deux ressorts peuvent s'appuyer l'un sur l'autre de façon correcte par des faces planes perpendiculaires à leurs axes et qui s'étendent sur environ trois-quarts de cercle. L'utilisation de ressorts à pas inversés fait que, à la compression maximale de ces ressorts, leurs secondes extrémités en appui l'une sur l'autre ont tendance à tourner dans le même sens, ce qui garanti la qualité de l'appui des ressorts l'un sur l'autre dans des conditions extrêmes.

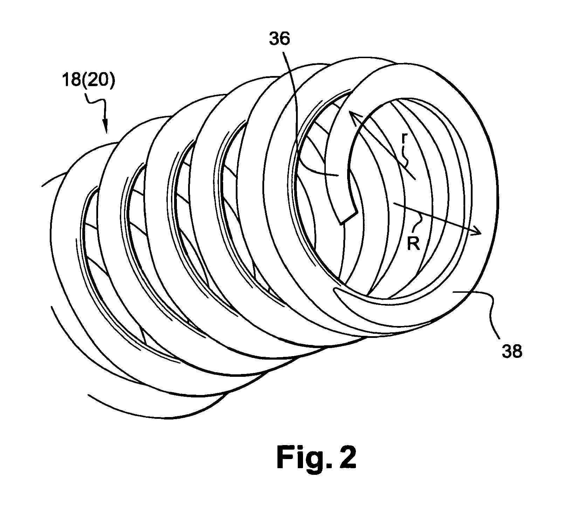

Comme on le voit bien en figure 2, il est avantageux que la pointe 36 terminant chaque extrémité meulée 38 des ressorts soit rabattue vers l'intérieur du ressort, cette pointe ayant ainsi un rayon de courbure r autour de l'axe du ressort qui est plus faible que le rayon de courbure R du restant de la spire d'extrémité. On évite ainsi, quand les deux ressorts sont comprimés l'un sur l'autre, que ces pointes 36 relativement fragiles du fait de leur faible épaisseur soient soumises à des chocs et risquent de se rompre. Leur disposition à l'intérieur du ressort permet de ne pas les amener en butée sur des éléments beaucoup plus résistants qui pourraient provoquer leur rupture.

Le rabattement vers l'intérieur des pointes 36 sur une étendue angulaire qui est généralement comprise entre 90 et 180° environ, fait aussi que la partie radialement externe de la spire meulée de chaque extrémité du ressort se trouve légèrement décalé vers l'intérieur du ressort et ne peut venir frotter sur l'extrémité de la goulotte 24. On évite ainsi tout risque de détérioration de cette goulotte par frottement de l'arête de la surface meulée de la spire, ce que l'on pouvait également éviter dans la technique antérieure en usinant un chanfrein sur la partie radialement externe de cette arête susceptible de venir au contact de la goulotte.

Les ressorts 18, 20 de chaque paire sont pré-cintrés avant leur montage dans la chambre 24 du volant primaire 10. Ce pré-cintrage leur interdit toute rotation autour de leur axe en fonctionnement.

Au régime de ralenti, les vibrations et à-coups de faible amplitude et de faible énergie générés par le moteur sont absorbés par les ressorts 20 de chaque paire de ressorts de l'amortisseur de torsion. L'absorption des vibrations et des à-coups accompagnant la transmission d'un couple relativement élevé se traduit par une compression maximale des ressorts 20 et par une compression au moins partielle des ressorts 18.

Au passage par la fréquence de résonance, au démarrage et à l'arrêt du moteur, les ressorts 18 et 20 de chaque paire sont comprimés au maximum entre les butées 26 du volant primaire et les pattes radiales 28 du voile 30 fixé au volant secondaire. Grâce au meulage des extrémités des ressorts, à l'utilisation de ressorts 18, 20 de pas inverses et au rabattement vers l'intérieur des pointes 36 d'extrémité des ressorts, la durée de service des doubles volants amortisseurs est notablement accrue.

Des essais comparatifs ont été réalisés sur des doubles volants amortisseurs équipés de ressorts de même pas, de ressorts de pas inversés, en appui directement l'un sur l'autre ou par l'intermédiaire d'une coupelle 34, ces ressorts ayant ou non des pointes d'extrémités 36 rabattues vers l'intérieur.

Ces essais comparatifs ont montré que l'invention permet de multiplier par un coefficient compris entre 5 et 10 la durée de vie d'un double volant amortisseur lorsqu'il est équipé de ressorts à pas inversés, à extrémités meulées en appui l'une sur l'autre par l'intermédiaire d'une coupelle 34 et à pointes d'extrémité 36 rabattues vers l'intérieur. Les durées de service ainsi obtenues sont très nettement supérieures à celles requises dans les cahiers des charges des constructeurs automobiles.

Bien que l'ensemble de la description qui précède s'appui sur un double volant amortisseur, l'invention décrite est aisément applicable à toute type d'amortisseur de torsion devant intervenir dans une ligne de transmission de couple, notamment dans un véhicule automobile. Un tel amortisseur selon l'invention est incorporable dans une ligne de transmission de couple comportant un moteur hybride, un embrayage ou multiple à sec, un embrayage double ou multiple dans l'huile, un embrayage multidisques, un volant flexible, un convertisseur de couple, un 'lock-up' pour convertisseur de couple, un disque de friction.

## Revendications

1. Amortisseur de torsion (16), en particulier pour un double volant amortisseur pour véhicules automobiles, agencé entre un élément d'entrée (10) et un élément de sortie (12) coaxiaux pour la transmission d'un couple de rotation, cet amortisseur comprenant des ressorts (18,20) à disposition circonférentielle et dont les extrémités, qui viennent en appui sur des butées (26,28) solidaires des éléments d'entrée et de sortie, sont meulées et présentent des surfaces planes d'appui sur ces butées, les extrémités meulées (38) des ressorts se terminant par des pointes (36) orientées vers l'intérieur des ressorts, **caractérisé en ce que** la pointe (36) de chaque ressort orientée vers l'intérieur du ressort s'étend sur au moins 90° autour de l'axe du ressort.

2. Amortisseur de torsion selon la revendication 1, **caractérisé en ce que** la pointe (36) de chaque ressort (18,20) se trouve sur la partie interne du ressort.

3. Amortisseur de torsion selon l'une des revendications précédentes, **caractérisé en ce que** les ressorts (18,20) sont pré-cintrés avant leur montage dans l'amortisseur.

4. Amortisseur de torsion selon l'une des revendications précédentes, **caractérisé en ce que** les ressorts (18,20) sont agencés par paires dans lesquelles deux ressorts de même diamètre, ayant des raideurs différentes et des pas inversés, sont disposés bout à bout.

5. Amortisseur de torsion selon la revendication 4, **caractérisé en ce que** les extrémités des deux ressorts (18,20) qui sont en regard l'une de l'autre, sont directement en appui l'une sur l'autre.

6. Amortisseur de torsion selon la revendication 4, **caractérisé en ce qu'**une coupelle d'appui (34) est interposée entre les deux ressorts (18,20) de chaque paire.

7. Amortisseur de torsion selon la revendication 6, **caractérisé en ce que** la coupelle d'appui (34) comprend des moyens de centrage et de guidage des extrémités des ressorts.

## Claims

1. Torsion damper (16), in particular for a double damping flywheel for motor vehicles, arranged between an input element (10) and an output element (12), both coaxial, for transmitting a rotation torque, this damper comprising circumferentially arranged springs (18, 20) whose ends, which come into abutment on stops (26, 28) fixed to the input and output elements, are ground and have flat surfaces for abutment on these stops, the ground ends (38) of the springs terminating in tips (36) that are oriented towards the inside of the springs, **characterised in that** the tip (36) of each spring oriented towards the inside of the spring extends over at least 90° around the axis of the spring.

2. Torsion damper according to claim 1, **characterised in that** the tip (36) of each spring (18, 20) is situated on the internal part of the spring.

3. Torsion damper according to one of the preceding claims, **characterised in that** the springs (18, 20) are pre-curved before they are mounted in the damper.

4. Torsion damper according to one of the preceding claims, **characterised in that** the springs (18, 20) are arranged in pairs in which two springs with the same diameter, having different stiffnesses and opposite pitches, are disposed end to end.

5. Torsion damper according to claim 4, **characterised in that** the ends of the two springs (18, 20) that are facing each other are directly in abutment on each other.

6. Torsion damper according to claim 4, **characterised in that** a support cup (34) is interposed between the two springs (18, 20) in each pair.

7. Torsion damper according to claim 6, **characterised in that** the support cup (34) comprises means of centring and guiding the ends of the springs.

## Patentansprüche

1. Torsionsdämpfer (16), insbesondere für ein Zweimassen-Dämpfungs-Schwungrad für Kraftfahrzeuge, der zur Übertragung eines Drehmoments zwischen einem Eingangselement (10) und einem dazu koaxialen Ausgangselement (12) angeordnet ist, wobei der Torsionsdämpfer umfangsmäßig wirksame Federn (18, 20) umfasst, deren Enden, die in Auflage auf fest mit dem Eingangselement und Ausgangselement verbundene Anschläge (26, 28) kommen, angeschliffen sind und ebene Auflageflächen auf diesen Anschlägen bilden, wobei die angeschliffenen Enden (38) der Federn an Stellen (36) enden, die in das Innere der Federn orientiert sind, **dadurch gekennzeichnet, dass** sich die in das Innere der Feder orientierte Stelle (36) jeder Feder um mindestens 90° um die Achse der Feder herum erstreckt.

2. Torsionsdämpfer nach Anspruch 1, **dadurch gekennzeichnet, dass** die Stelle (36) jeder Feder (18, 20) sich auf dem innenliegenden Teil der Federn befindet.

3. Torsionsdämpfer nach einem der vorherigen Ansprüche, **dadurch gekennzeichnet, dass** die Federn (18, 20) vor ihrer Montage in den Dämpfer vorgebogen sind.

4. Torsionsdämpfer nach einem der vorherigen Ansprüche, **dadurch gekennzeichnet, dass** die Federn (18, 20) in Paaren angeordnet sind, in denen zwei Federn mit gleichem Durchmesser verschiedene Steifigkeiten und entgegengesetzte Gewindesteigungen haben und aneinanderliegend angeordnet sind.

5. Torsionsdämpfer nach Anspruch 4, **dadurch gekennzeichnet, dass** die einander gegenüberliegenden Enden der beiden Federn (18, 20) unmittelbar aneinander anliegen.

6. Torsionsdämpfer nach Anspruch 4, **dadurch gekennzeichnet, dass** eine Auflageschale (34) zwischen den beiden Federn (18, 20) von jedem Paar eingefügt ist.

7. Torsionsdämpfer nach Anspruch 6, **dadurch gekennzeichnet, dass** die Auflageschale (34) Mittel zur Zentrierung und zur Führung der Federenden aufweist.
